# EUROPÄISCHE PATENTSCHRIFT

(11) **EP 1 499 272 B1**
(45) Veröffentlichungstag und Bekanntmachung des Hinweises auf die Patenterteilung: **18.01.2006**
(21) Anmeldenummer: 03714602.4
(22) Anmeldetag: 28.04.2003
(51) Int. Cl.: A61F 13/00, A61F 13/20

(54) **SCHEIBE, VERFAHREN ZUR HERSTELLUNG DERSELBEN SOWIE EINRICHTUNG ZUR DURCHFÜHRUNG DIESES VERFAHRENS**
DISK, METHOD FOR PRODUCING THE SAME, AND DEVICE FOR CARRYING OUT SAID METHOD
DISQUE, PROCEDE POUR LE PRODUIRE ET SYSTEME POUR METTRE EN OEUVRE CE PROCEDE

(30) Priorität: 26.04.2002 CH 714022002
(43) Veröffentlichungstag der Anmeldung: 26.01.2005
(73) Patentinhaber: Flawa AG, 9230 Flawil (CH)
(72) Erfinder: ZILTENER, Christoph, CH-9230 Flawil (CH); HEINIMANN, Hans, CH-9400 Rorschach (CH); WERNER, Ernst, CH-9230 Flawil (CH); MAVELY, Joseph, 72800 Eningen (DE); DAUNER, Martin, 73732 Esslingen (DE)
(74) Vertreter: Liebetanz, Michael
(86) Internationale Anmeldenummer: PCT/CH2003/000274
(87) Internationale Veröffentlichungsnummer: WO 2003/090653

(56) Entgegenhaltungen:
- EP-A- 0 405 043
- EP-A- 0 548 039
- US-A- 5 928 184

## Beschreibung

Die vorliegende Erfindung betrifft eine Scheibe oder einen Bausch aus einer oder mehreren Lagen zum Auftragen und/oder Aufsaugen von flüssigen oder halbfesten Substanzen, wobei Randpartien der Lage oder Lagen flächenhaft aufeinander liegen und wobei die Scheibe an ihrem Umfang über einen Verdichtungsbereich verfügt, ein Verfahren zur Herstellung derselben sowie eine Einrichtung zur Durchführung des Verfahrens.

Eine Scheibe oder ein Bausch dieser Gattung, welche aus Watte sind und eine runde, elliptische oder eckige Form aufweisen, sind beispielsweise aus EP-B 0 405 043 bekannt.

Scheiben der genannten Gattung sind zu einem Gebrauchsartikel in Hygiene, Kosmetik und Medizin geworden. Die bisher auf dem Markt erhältlichen Produkte entsprechen zwar den Anforderungen an Saugfähigkeit und Weichheit, weisen jedoch eine unerwünschte Flusenbildung auf, so dass Wattefasern auf der Haut zurückbleiben, wenn eine flüssige oder halbfeste Substanz auf die Haut aufgetragen oder von dieser weggewischt wird. Ein weiterer Nachteil dieser vorbekannten Wattescheiben besteht darin, dass die aufeinander liegenden Schichten aus Watte einen ungenügenden Zusammenhalt aufweisen, so dass die Wattescheibe während des Gebrauchs derselben verhältnismässig bald zerfällt.

Aus der genannten EU-PS sind zwar Wattescheiben bekannt, bei welchen die Ränder der einzelnen Schichten der Scheibe miteinander verbunden sind. Diese Verbindungsstelle bildet eine Art von Naht, in welcher die Fasern der einzelnen Scheibenschichten untereinander vermischt und verbinden sind. Eine solche Naht ist verhältnismässig steif. Insbesondere wenn man eine empfindliche Haut hat, dann kann ein Kratzgefühl während der Benützung einer solchen Scheibe entstehen.

Die Aufgabe der vorliegenden Erfindung ist, die genannten sowie noch weitere Nachteile der vorbekannten Scheiben zu beheben.

Diese Aufgabe wird bei der Scheibe der eingangs genannten Art erfindungsgemäss mit den Merkmalen des kennzeichnenden Teils des Patentanspruchs 1 gelöst.

Dadurch, dass bei einer runden Scheibe gemäss der Erfindung die flächenhaften Randpartien der Materiallagen einen im wesentlichen flachen Ring bilden, wobei die Randpartien der Lagen in diesem Ring aufeinander liegen, und dass dieser Ring an seiner Aussenseite durch die Umfangsfläche der Scheibe und an seiner Innenseite durch den Bereich des Verdichtungsbereiches oder der Rille definiert ist, kann ein Abstand zwischen der Umfangsfläche der Scheibe und des Verdichtungsbereiches gewählt werden, dass die von dem Verdichtungsbereich gegen aussen hin gerichteten Materialfasern so lang sind, dass sie nicht steif, sondern vielmehr leicht biegbar sind.

Diese Scheibe kann erfindungsgemäss mit einem Verfahren hergestellt werden, welches im Patentanspruch 5 definiert ist. Bei Scheibe und Verfahren ist festzuhalten, dass sich der Begriff des radialen Abstandes auf den Abstand von einem allfälligen Symmetriezentrum der Scheibe bzw. einem Schwerpunkt der Scheibe bezieht, was bei Polygonen direkt einsichtig ist.

Die vorliegende Scheibe kann erfindungsgemäss mit Hilfe einer Einrichtung hergestellt werden, welche im Patentanspruch 6 definiert ist.

Weitere erfindungsgemässe Ausgestaltungen sind in den Unteransprüchen gekennzeichnet.

Nachstehend werden Ausführungsbeispiele der vorliegenden Erfindung anhand der beiliegenden Zeichnungen beispielhaft näher erläutert. Es zeigen:
- Fig. 1: perspektivisch eine Scheibe nach einem ersten Ausführungsbeispiel der Erfindung,
- Fig. 2: perspektivisch die Scheibe aus Fig. 1, bei welcher die Schichten, welche sie aufweist und deren Ränder normalerweise untereinander verbunden sind, in einem Bereich derselben in Abstand voneinander gebracht worden sind,
- Fig. 3: in einem vertikalen Schnitt die Scheibe aus Fig. 1,
- Fig. 4: vergrössert einen Ausschnitt aus Fig. 3,
- Fig. 5: in einem vertikalen Schnitt eine erste Ausführung eines Werkzeuges einer Einrichtung zur Herstellung der Scheibe,
- Fig. 6: in einem vertikalen Schnitt eine zweite Ausführung eines Werkzeuges einer Einrichtung zur Herstellung der Scheibe,
- Fig. 7: in einem vertikalen Schnitt eine dritte Ausführung eines Werkzeuges einer Einrichtung zur Herstellung der Scheibe,
- Fig. 8: vergrössert ein Detail des Werkzeuges aus Fig. 7,
- Fig. 9: in einem vertikalen Schnitt eine vierte Ausführung eines Werkzeuges einer Einrichtung zur Herstellung der Scheibe,
- Fig. 10: eine schematische Unteransicht auf den Stempel des Werkzeuges nach Fig. 9,
- Fig. 11: eine Detailquerschnittsansicht entlang der Linie 11-11 aus der Fig. 10,
- Fig. 12: eine Detailquerschnittsansicht entlang der Linie 12-12 aus der Fig. 10,
- Fig. 13: schematische Seitenansicht von innen auf Matrize und Stempel gemäss einer ersten Ausführungsform von Stempel und Matrize,
- Fig. 14: schematische Seitenansicht von innen auf Matrize und Stempel gemäss einer zweiten Ausführungsform von Stempel und Matrize,
- Fig. 15: schematische Seitenansicht von innen auf Matrize und Stempel gemäss einer dritten Ausführungsform von Stempel und Matrize, und
- Fig. 16: schematische Seitenansicht von innen auf Matrize und Stempel gemäss einer vierten Ausführungsform von Stempel und Matrize.

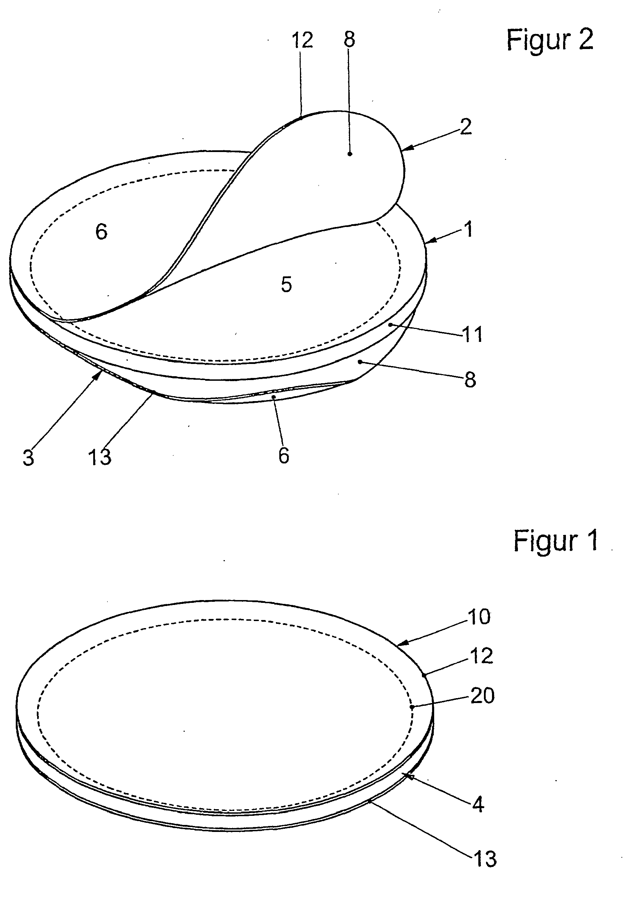

Die in Fig. 1 bis 4 dargestellte Scheibe oder Bausch kann beispielsweise zum Auftragen, Abtragen und/oder Aufsaugen von flüssigen oder halbfesten Substanzen dienen. Sie weist in diesem dargestellten Beispiel drei Schichten bzw. Lagen 1, 2 und 3 (Fig. 2), von welchen jede eine kreisförmige Kontur hat. Die dargestellte Scheibe hat somit eine kreisförmige Umfangswand 4. Die Scheibe braucht nicht ausschliesslich eine kreisförmige Kontur zu haben. Ihre Kontur bzw. Umfangswand 4 kann auch elliptisch oder aber auch eckig verlaufen, das heisst ein Polygon bilden. In einer einfachen Ausführung kann die vorliegende Scheibe nur zwei Lagen aufweisen. Diese zwei Lagen können die mittlere Schicht 1 und nur eine der äusseren Lagen 2 oder 3 oder nur die zwei äusseren Lagen 2 und 3 sein.

Bei anderen Ausführungsformen kann es sich auch um eine kein Lagen aufweisende Struktur handeln, sozusagen eine einlagige Struktur, bei der beispielsweise Zellstoffelemente in einer einzigen Schicht abgelagert und dann verpresst werden.

Gleiche Merkmale sind in allen Fig. jeweils mit den gleichen Bezugszeichen bezeichnet worden.

Zur anschaulicheren Darstellung ist die vorliegende, hier also dreilagige, Scheibe in Fig. 2 so ausgeführt, dass sich die Lagen 1 bis 3 der Scheibe, welche normalerweise aufeinander aufliegen, in einem Bereich des Umfanges der Scheibe in einem Abstand voneinander befinden. Der mittleren Lage bzw. Schicht 1 der Scheibe sind die zwei weiteren, äusseren Schichten 2 und 3 so zugeordnet, dass die äusseren Schichten 2 und 3 über ihre inneren Grossflächen 8 auf den planen Grossflächen 5 der mittleren Schicht 1 aufliegen. Die mittlere Lage 1 hat eine Randpartie 11, die obere äussere Lage 2 hat eine Randpartie 12 und die untere äussere Lage 3 hat eine Randpartie 13.

Die Schichten 1 bis 3 können aus demselben Material oder aus unterschiedlichen Materialien sein. Das Material der Schichten 1 bis 3 soll saugfähig sein. Vorteilhaft ist dieses Material bzw. sind die erwähnten Materialien faserig, wobei das Fasermaterial Baumwolle, Viskose, synthetische Fasern oder ein Gemisch aus diesen sein kann. Besonders vorteilhaft ist es, wenn für die Schichten 1 bis 3 Watte aus Baumwolle verwendet wird.

Die Materialschichten 1, 2 und 3 sind einander derart zugeordnet, dass sie eine zusammenhaltende Sandwich-Struktur bilden. Dies erreicht man beispielsweise dadurch, dass zumindest die Randpartien 11, 12 und 13 der genannten Materialschichten 1 bis 3 mit- bzw. untereinander flächenhaft verbunden sind.

Falls der Durchmesser der inneren Materiallage 1 kleiner ist als der Durchmesser der Aussenlagen 2 und 3, wie dies in Fig. 2 dargestellt ist, dann liegen die Randpartien 12 und 13 der äusseren Materiallagen 2 und 3 unmittelbar aufeinander.

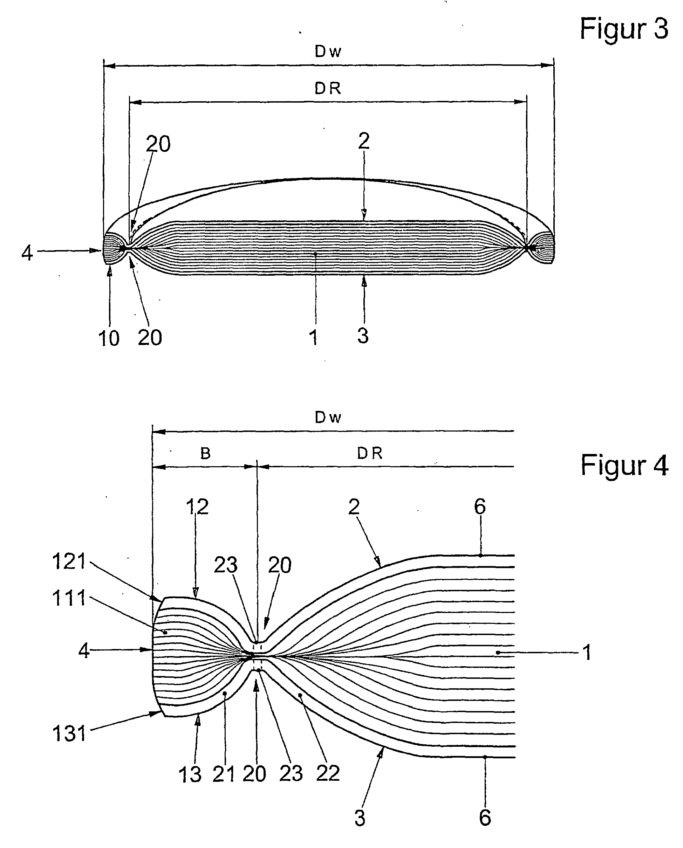

In Fig. 3 und 4 ist eine weitere Ausführung der Scheibe dargestellt, bei welcher der Durchmesser aller Materiallagen 1 bis 3 etwa gleich gross ist. In diesem Fall liegt jenes Material 111 der inneren Lage 1 zwischen den Randpartien 12 und 13 der Aussenlagen 2 und 3, welches sich im Randbereich 11 der mittleren Lage 1 befindet. Der Durchmesser der inneren Lage 1 hinsichtlich des Durchmessers der äusseren Lagen 2 und 3 so zu wählen, dass die Spitzen der Fransen 111 der Innenlage 1 in einer Linie mit den Stirnflächen 121 und 131 der äusseren Lagen 2 und 3 beim fertigen Produkt liegen. Folglich umfasst die Umfangswand 4 einer solchen Scheibe das zum Teil ausgefranste Material 111 der mittleren Lage 1 sowie die Umfangs- bzw. Stirnflächen 121 und 131 der Ränder 12 und 13 der Aussenlagen 2 und 3 der Scheibe.

Gleiches gilt sowohl für zweilagige Scheiben als auch für Scheiben ohne Lagenstruktur. Auch letztgenannte Scheiben weisen einen Bereich ausgefransten Materials aus, welches bei dem dargestellten Ausführungsbeispiel der Fig. 4 mit dem Bezugszeichen 111 versehen worden ist.

Die Scheibe weist zumindest eine Rille 20 auf. Diese Rille 20 erstreckt sich entweder kontinuierlich oder diskontinuierlich, d.h. in zumindest einem begrenzten Bereich der Länge des Scheibenumfanges, entlang dem Umfang der Scheibe. Der diskontinuierliche Verlauf der Rille 20 kommt beispielsweise dann vor, wenn die Umfangsfläche 4 der Scheibe Ecken aufweist. Es ist jedoch auch denkbar, dass die Rille 20 entlang dem Umfang einer kreisförmigen Scheibe nur streckenweise ausgeführt ist.

Die Rille 20 erstreckt sich beispielsweise in einem Abstand parallel zur Umfangsfläche 4 der Scheibe,. Der Abstand kann konstant sein oder variieren. Die Scheibe (Fig. 1 bis 4) hat eine erste kreisförmig verlaufende Rille 20 in der oberen äusseren Lage 2 und eine zweite kreisförmig verlaufende Rille 20 in der unteren äusseren Lage 3. Die jeweilige Rille 20 ist im faserigen Material der betreffenden Lage 1 bzw. 2 bzw. 3 von der äusseren Grossfläche 5 bzw. 6 derselben her ausgeführt. Sowohl die obere als auch die untere Rille 20 haben denselben Durchmesser Dr und sie verlaufen parallel zur Umfangsfläche 4 der Scheibe. Die sich zugeordneten Rillen 20 liegen übereinander bzw. einander gegenüber. Die jeweilige Rille 20 unterteilt die jeweilige Lage 1, 2 bzw. 3 in einen mittleren bzw. grossflächigen Abschnitt 5 bzw. 6 und einen im wesentlichen ringförmigen Abschnitt 11, 12 bzw. 13. Der Durchmesser Dr der Rille 20 ist daher kleiner als der Durchmesser Du der Umfangsfläche 4 der Scheibe.

Der Querschnitt der jeweiligen Rille 20 hat die Form eines offenen U. Folglich weist der Querschnitt der Rille 20 schräg auseinander verlaufende Flanken 21 und 22 sowie einen die zueinander näher liegenden Enden der Flanken 21 und 22 miteinander verbindenden und bogenförmigen Boden 23 (Fig. 4) auf. Die erste Flanke 21 der Rille 20 in der Aussenlage 2 bzw. 3 geht in den Randabschnitt 12 bzw. 13 der betreffenden Aussenlage 2 bzw. 3 über. Die zweite U-Flanke 22 der Rille 20 geht in den mittleren, grossflächigen Abschnitt 6 der Aussenlage 2 bzw. 3 über.

Die Rillen 20 einer Scheibe sind in einander entgegengesetzten Richtungen orientiert, so dass sie sich in einander entgegengesetzten Richtungen öffnen. Ihre Böden 23 sind mit ihren konvexen Abschnitten einander zugewandt. Unter Umständen kann es zweckmässig sein, wenn es mehr als eine Rille 20 in den Lagen 1 bis 3 gibt. In diesem Fall haben solche Rillen unterschiedliche Durchmesser und sie liegen konzentrisch zueinander.

Bei der Ausführung der Scheibe gemäss Fig. 1 und 2 liegen die Fasern der Aussenlagen 2 und 3, welche sich im Bereich der Aussenseite der Boden 23 der sich einander zugeordneten Rillen 20 befinden, unmittelbar aufeinander. Bei der Ausführung der Scheibe gemäss Fig. 3 und 4 liegt das faserige Material der ersten bzw. inneren Lage 1 zwischen den Boden 23 der einander zugeordneten Rillen 20. Während der Bildung der Rillen 20 werden die Fasern der Innenlage 1 zwischen dem Material der Rillenboden 23 sehr stark zusammengepresst bzw. geklemmt. Dies hat zur Folge, dass die Fasern der Innenlage 1 durch die Fasern der Aussenlagen 2 und 3 an Ort und Stelle gehalten werden und sich gegenüber diesen nicht bewegen können. Die innere Lage 1 aus faserigen Material kann lockerer sein als das faserige Material der aussen liegenden Lagen 2, 3 der Scheibe. Bei einer in den Fig. nicht dargestellten Ausführungsform einer lagenlosen Scheibe wird das nicht eindeutige Lagen bildende Fasermaterial im Bereich der Rille 20 zusammengepresst, um die gewünschte Klemmung und Verprägen der Randbereiche des Bausches an sich zu erhalten.

Die den Durchmesser Dr der Rille 20 betreffende Masslinie geht durch die Mitte der Breite des Bodens 23 der Rille 20 hindurch. Die halbe Differenz zwischen dem Durchmesser Du der Umfangsfläche 4 und dem Durchmesser der Rille Dr ergibt die Breite B des ringförmigen Randes 10 der Scheibe. Diese Breite des ringförmigen Scheibenrandes 10 kann beispielsweise 1 mm betragen. Die Breite der Rille 20 selbst kann beispielsweise 0,5 mm betragen.

Die Mitte des Bodens 23 der jeweiligen Rille 20 befindet sich somit in einem Abstand B von der Umfangsfläche 4 der Scheibe bzw. von der Umfangsfläche 121 bzw. 131 der Aussenlage 2 bzw. 3. Die Breite B dieses ringförmigen Randes 10 der Scheibe soll so gross gewählt werden, dass es möglich ist, dass die Fasern der Lagen 1 bis 3 im Randbereich 10 der Scheibe über ausreichend langen Strecken flächenhaft aneinander aufliegen. Daraus geht ferner hervor, dass die Länge der Fasern der Lagen 1 bis 3 grösser sein soll als die Breite B des Scheibenrandes 10, damit sich diese, wenn sie einerends im Bereich des Scheibenrandes 10 befinden, durch den Bereich der Rillen 20 bis in das Innere 5 bzw. 6 der betreffenden Lage 1 bis 3 erstrecken können. Beispielsweise bei Baumwollfasern lässt sich diese Forderung problemlos erfüllen. Dieses flächenhafte Aufliegen der Materialien nur der äusseren Lagen 2 und 3 (Fig. 1 und 2) oder aller drei Lagen 1 bis 3 erfolgt vor allem in jenem Abschnitt des Randbereiches 10 der Scheibe, welcher sich zwischen den Böden 23 der einander gegenüberliegenden Rillen 20 befindet.

Der Abstand zwischen der Umfangsfläche 4 und dem Durchmesser der Rille 20 kann auch so gewählt sein, dass die von der Rille 20 gegen aussen hin abstehenden Abschnitte der Fasern der inneren Lage 1 so lang sind, dass sie nicht steif, sondern leicht biegbar sind. Die so langen Fransen 11 verhindern das bereits erwähnte Kratzgefühl, wenn die Scheibe in der angegebenen Weise verwendet wird.

Bei der vorbekannten Scheibe gemäss EU-B 0 405 043 entsteht die Verbindung der Fasern aller drei Lagen 1 bis 3 während dem Herausstanzen der Scheibe aus einer dreilagigen Materialbahn, und zwar durch zusammenquetschen der Enden der sich im Bereich der Stanzmesser befindlichen Fasern. Manchmal löst sich jener Wulst am Rande der Scheibe auf, in welchem die Enden der abgeschnittenen Fasern zusammengequetscht sind. Dies deswegen, weil die Enden der Fasern, welche sich im Inneren des Wulstes befinden, sehr kurz sind.

Beim Herausstanzen werden die Fasern vor allem der Aussenlagen in der Richtung der Innenlage aus dem übrigen Material der Aussenlagen stark herausgezogen, so dass diese Fasern den ursprünglichen Halt zu den Fasern des übrigen Teiles des Materials der Aussenlage verlieren. Dies verursacht oft, dass ein Riss zwischen dem Umfangwulst, in welchem die Enden der Fasern aller drei Lagen zusammengepresst sind, und dem übrigen Material der Aussenlagen entsteht. Dieser Riss erstreckt sich meistens über eine wesentliche Länge des Umfanges der Scheibe, wodurch der ursprüngliche Zusammenhalt der drei Scheibenlagen ebenfalls verloren gehen kann.

Bei der vorliegenden Scheibe kommen diese Probleme nicht vor. Der Zusammenhalt der Scheibenlagen 1 bis 3 ist durch die Verhältnisse im Bereich der verhältnismässig breiten Rillen 20 des verhältnismässig breiten Randes 10 der Scheibe bestimmt. Im Bereich des Bodens 23 der Rillen 20 werden die Materialfasern nicht abgeschnitten, sondern sie setzen ihren Verlauf aus dem Mittelbereich 6 der Lage in die Randpartien 11, 12 und 13 der Lagen 1 bis 3 fort. Beim grossflächigen Aufliegen der Lagen 1 bis 3 oder zumindest der äusseren Lage 2 und 3 im Bereich der Rillen 20 aufeinander gibt es eine Reibung bzw. Haftung unter den benachbarten Materialfasern, und zwar über beträchtliche Längen derselben. Die sich im Bereich der zweiten U-Flanken 22 der Aussenschichten 2 und 3 befindlichen Fasern werden bei der vorliegenden Scheibe nicht so stark wie bisher aus dem Verbund mit den Fasern des übrigen Teiles 6 der Aussenlage 2 bzw. 3 gezogen, weil durch die Bildung der Rille 20 vielmehr nur der Verlauf dieser Fasern geändert wird. Der gleiche Effekt tritt ebenfalls bei einlagigen oder mehrlagigen Scheiben auf.

An der Stelle der Rille 20 wird das dortige Material, z.B. das faserige Material dermassen zusammengedrückt bzw. zusammengequetscht, dass die Materiallagen im Bereich der Scheibenrille 20 miteinander verbunden werden und bleiben.

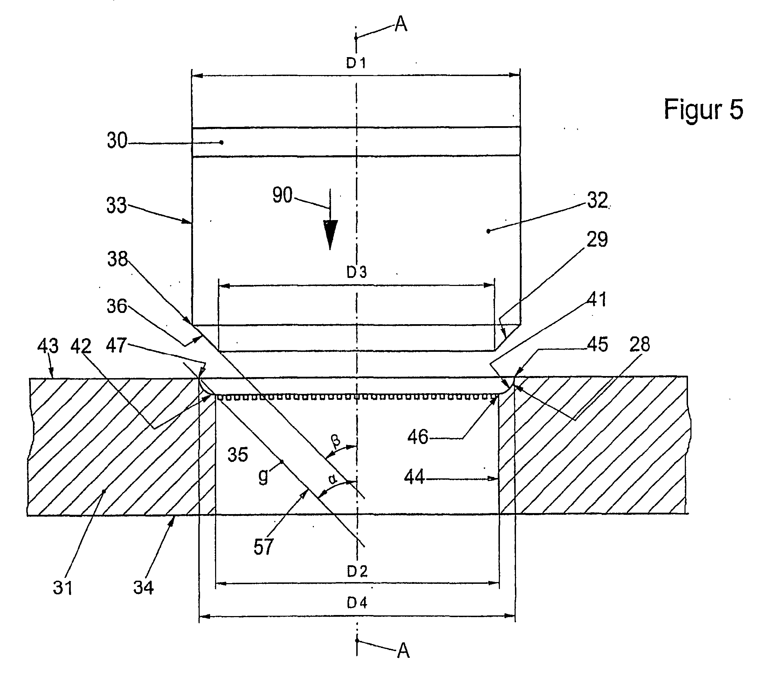

Dabei kann anstelle der Rille 20 allgemein ein Verdichtungsbereich vorgesehen sein, der in einem radialen Abstand von dem kreisförmigen Umfangsrand 4 vorgesehen ist. Dieser radiale Abstand kann konstant oder variabel (sich entlang des Umkreisweges periodisch verändernd) sein. Seine Existenz gewährleistet das Verbleiben von Material 111 jenseits des Verdichtungsbereiches 20 mit den beschriebenen Vorteilen. Insbesondere, und das wird mit den Prägewerkzeugen nach den Fig. 5 und folgende erreicht, ist der Verdichtungsbereich eine periodische Abfolge von geprägten und geklemmten Bereichen, wobei die geprägten Abschnitte durchgehende Löcher in der Scheibe bilden können.

Ferner ist es unter den genannten Umständen möglich, das faserige Material, welches sich im Bereich der Rillen 20 der betreffenden Lagen 2 und 3 dermassen zusammenzudrücken bzw. zusammenzuquetschen, dass die Materiallagen 2 und 3 im Bereich der Scheibenrillen 20 miteinander sehr fest verbunden sind. Denn wenn ein ausreichend hoher Druck im Bereich der Rillen 20 auf das Fasermaterial ausgeübt wird, dann dringen die Fasern der einen Aussenlage 2 bzw. 3 in den Bereich des Fasermaterials der anderen äusseren Lage 3 bzw. 2 ein und dadurch entsteht ein fester Schluss zwischen verhältnismässig langen Strecken der Fasern der übereinander liegenden Lagen 2 und 3. Entsprechendes gilt, wenn sich die Fasern der Randpartie 111 der Innenlage 1 zwischen den Randpartien 121 und 131 der Aussenlagen 2 und 3 befinden. Bei einem einlagigen Bausch betrifft dies die im wesentlichen in einer ersten zum Beispiel obersten Ebene verlaufenden Fasern, die einen festen Schluss mit anderen, in einer zweiten zum Beispiel untersten Ebene verlaufenden Fasern eingehen.

Fig. 5 zeigt in einem vertikalen Schnitt eine erste Einrichtung zur Herstellung der vorliegenden Scheibe, wenn diese Scheibe eine rundlich, d.h. z.B. kreisförmig oder elliptisch, verlaufende Umfangsfläche 4 hat. Diese Einrichtung umfasst unter anderem eine Matrize 31 und einen dazugehörenden Stempel 32. Es versteht sich, dass diese Bestandteile der vorliegenden Einrichtung in einer an sich bekannten Presse einsetzbar sind, welche die erforderlichen Bewegungen des Stempels 32 durchführen kann. Die genannten Bestandteile der vorliegenden Einrichtung sind so ausgeführt, dass sie einen schneidenden Abschnitt und einen klemmenden Abschnitt haben, wobei diese Abschnitte Teile eines aktiven Abschnittes 28 an der Matrize 31 sowie eines aktiven Abschnittes 29 am Stempel 32 sind.

Der Grundkörper 33 des Stempels 32 ist bei dem hier genannten Einsatz für einen runden Bausch im wesentlichen zylinderförmig und der genannte aktive Abschnitt 29 am Stempel 32 ist der Stirnfläche des Zylinders 33 zugeordnet. Der Stempelgrundkörper 33 hat einen Durchmesser D1. Die zum aktiven Abschnitt 29 des Stempels 32 gegenüberliegende Stirnfläche des Stempelgrundkörpers 33, auf welche die Presse während des Betriebes dieser Einrichtung einwirkt, ist mit einer Lage 30 versehen. Diese Lage 30 ist aus einem nachgiebigen Material, beispielsweise aus einem Elastomer.

Der Grundkörper 34 der Matrize 31 ist im wesentlichen plattenförmig und in dieser Platte 34 ist eine Öffnung 35 ausgeführt. Die Achse dieser Matrizenöffnung 35 und die Achse des Stempels 32 liegen auf einer gemeinsamen Achse A. Der Durchmesser D2 der Öffnung 35 in Matrize 31 ist kleiner als der Durchmesser D1 des Stempels 32. Der genannte aktive Abschnitt 28 an der Matrize 31 ist in jener Mündung der Matrizenöffnung 35 ausgeführt, welche dem Stempel 32 zugewandt ist.

Der aktive Abschnitt 29 des Stempels 32 umfasst eine umlaufende Fase 36, welche sich entlang dem Umfang des Stempelgrundkörpers 33 erstreckt. Diese Fase 36 hat eine Seitenfläche, welche die Form des Mantels eines stumpfen Kegels hat. Der Durchmesser jener Grundfläche dieses stumpfen Kegels 36, welche sich an den Grundkörper 33 des Stempels 32 anschliesst, hat ebenfalls den Durchmesser D1. Am Übergang zwischen dem Stempelgrundkörper 33 und dieser Konuswand 36 ist eine Kante 38 vorhanden. Der Durchmesser jener Grundfläche des stumpfen Kegels 36, welche vom Grundkörper 33 des Stempels 32 abgewandt liegt, hat einen Durchmesser D3. Dieser Durchmesser D3 ist kleiner als der Durchmesser D2 der Öffnung 35 in der Matrize 31.

Da der gerade beschriebene aktive Abschnitt 29 von der Stirnfläche des Stempelgrundkörpers 33 absteht, wird dieser Abschnitt 29 auch als konvexe Fase bezeichnet.

Der aktive Abschnitt 28 der Matrize 31 umfasst eine umlaufende Rille 41, welche in jener Mündung der Matrizenöffnung 35 ausgeführt ist, welche dem Stempel 32 zugewandt ist. Der Schnitt durch diese Rille 41 bzw. durch den Boden 42 dieser Rille 41 hat die Form einer gekrümmten Linie, wobei die Wölbung dieser Linie in das Innere des Materials der Matrize 31 hin gerichtet ist. Die Winkellage dieser Kurve 42 beträgt etwa 90 Grad. Weil diese Fase 41 in das Innere der Matrize hin gerichtet ist, wird diese Fase 41 auch konkave Fase genannt. Der Winkel der Kurve 42 kann insbesondere auch zwischen 70 und 110 Grad liegen.

Das eine Ende 47 der Kurve 42 schliesst sich an die obere Oberfläche 43 des Matrizengrundkörpers 34 an, und zwar unter Bildung einer Kante 45. Diese Endpartie 47 der Kurve 42 steht praktisch senkrecht zur genannten Matrizenoberfläche 43. Diese Kante 45 hat einen Durchmesser D4 und dieser Durchmesser D4 ist kleiner als der Durchmesser D1 der oben liegenden Kante 38 am Stempel 32. Das andere Ende der Bodenkurve 42 schliesst sich an die Innenfläche 44 der öffnung 35 in der Matrize 31 und zwar unter Bildung einer Kante 46. Diese Kante 46 hat denselben Durchmesser D2 wie die - Matrizenöffnung 35. Diese Endpartie 46 der Bodenkurve 42 steht im wesentlichen senkrecht zur Innenfläche 44 der Öffnung 35 in der Matrize 31.

Man kann sich eine Gerade g vorstellen, welche durch die Punkte 45 und 46 hindurchgeht und welche die Achse A unter der Bildung eines Winkels Alpha schneidet. Der Neigungswinkel Alpha (α) dieser Geraden 9 und somit auch eines durch die genannten Punkte 45 und 46 gelegten Konusmantels 57, bei dem die Gerade g die Mantelbildende darstellt, gegenüber der Zentralachse A ist etwas grösser als der Neigungswinkel Beta (β) der Fase 36 am Stempel 32. Das Ausführungsbeispiel der Erfindung zeigt mit der Fig. 5 einen Anwendungsfall, in dem D1>D4>D2>D3 ist.

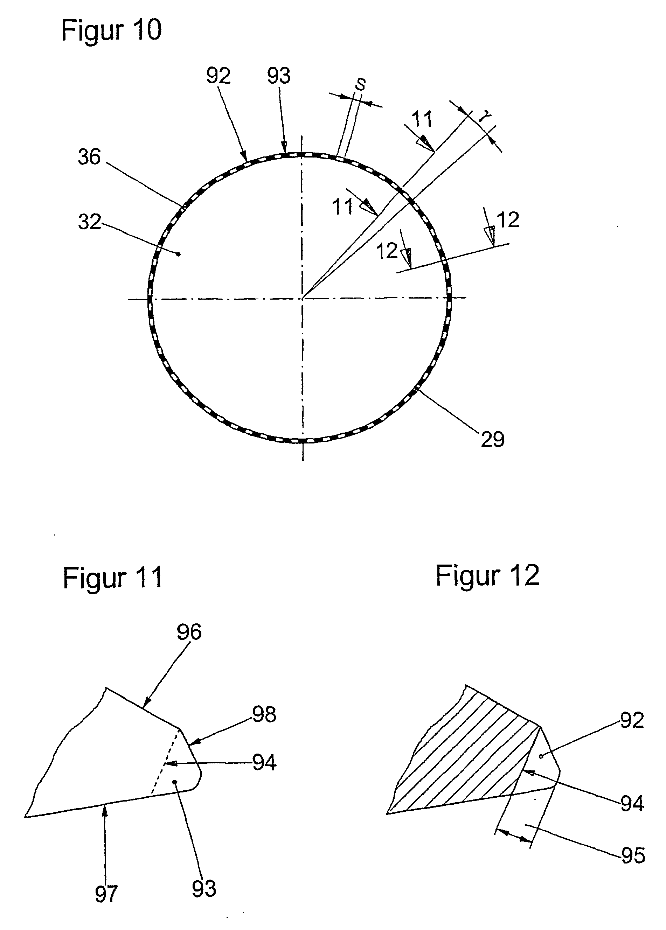

Während der Herstellung der Scheiben wird ein bahnförmiges Material zwischen die Matrize 31 und den Stempel 32 geführt, das heisst oberhalb der Oberfläche 43 der Matrize 31. Der Neigungswinkel Beta der Konuswand 36 am Stempel 32 ist weniger steil bzw. er ist grösser gewählt als der Winkel Alpha. Beim Schliessen des Werkzeuges durch Bewegung des Stempels 32 relativ zur Matrize 31 entsprechend dem Pfeil 90 kommt zunächst der Konusmantel 36 zur Auflage auf der Aussenkante 45 der konkaven Fase 41 derart, dass die Scheibe zwischen der Konuswand 36 am Stempel 32 und der Kante 45 an der Matrize 31 aus dem bahnförmigen Material herausgeschnitten wird. Die Randpartie dieser Scheibe wird ausserdem zwischen der Konuswand 36 und der unteren Kante 46 an der Matrize 31 geklemmt. Durch diese Klemmung entsteht die bereits beschriebene Rille 20 in den Lagen 2 und 3 sowie das Zusammendrücken der Enden der Fasern in der Randpartie 11 der Mittellage 1 (Fig. 4). Es ist festzuhalten, dass bei der in der Fig. 5 dargestellten Ausführungsform eine periodische Struktur entsprechend zu Fig. 10 in der Matrize 31 vorgesehen ist. Es könnte aber auch - bei einer einfacheren Ausführung - keine periodische Struktur vorgesehen sein.

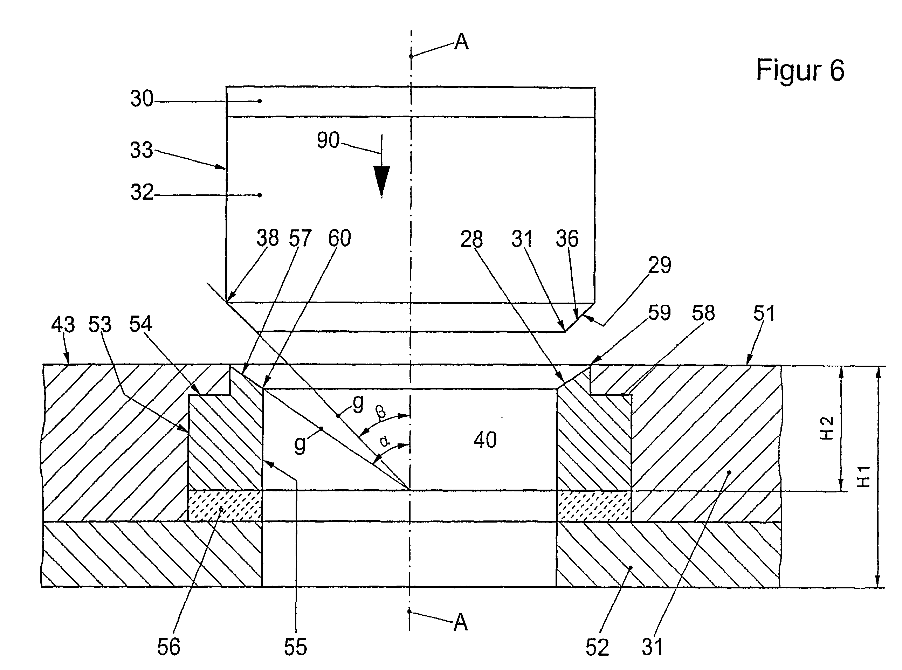

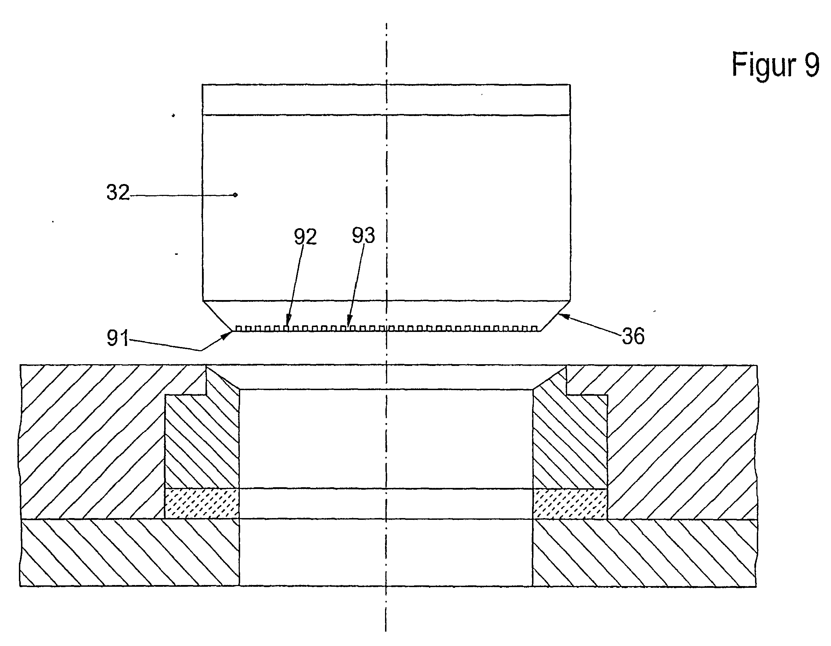

Bei der in Fig. 6 dargestellten Ausführungsform der vorliegenden Einrichtung ist der Stempel 32 praktisch gleich ausgebildet wie dieser in Zusammenhang mit Fig. 5 und 9 beschrieben worden ist.

Die Matrize 31 hat eine Hauptplatte 51 und eine darunter liegende Hilfsplatte 52. Die Matrizenöffnung 35 geht durch die beiden Matrizenplatten 51 und 52 hindurch. Von der Unterseite der Hauptplatte 51 her ist eine Öffnung 53 mit vergrössertem Durchmesser in dieser Hauptplatte 51 ausgeführt. Jene Mündung dieser vergrösserten Öffnung 53, welche dem Stempel 32 zugewandt ist, ist mit einem ringförmigen Anschlag 54 versehen, welcher im Inneren der vergrösserten Öffnung 53 angeordnet ist und dessen Aussenfläche mit der Oberfläche 43 der Matrize 31 bündig ist. Der Durchmesser der Öffnung in diesem umlaufenden Anschlag 54 ist etwas kleiner als der Durchmesser des Stempelgrundkörpers 33.

Die Öffnung 53 mit dem vergrösserten Durchmesser ist mit einem Klemmring 55 ausgekleidet. Im Aussenrand des oberen Endes des Klemmringes 55 ist eine umlaufende Ausnehmung 58 ausgeführt, deren Form und Abmessungen so gewählt sind, dass der umlaufende Anschlag 54 in diesem Absatz 58 Platz finden kann. Die Höhe der umlaufenden Ausnehmung 58 im Klemmring 55 ist kleiner als die Höhe des umlaufenden Anschlags 54 in der Matrizenplatte 51. Die Folge davon ist, dass die Oberseite des Klemmringes 55 tiefer liegt als die Oberseite 43 der Matrize 31.

Der aktive Abschnitt 28 der Matrize 31 umfasst eine Schnittkante 59. Dieser aktive Abschnitt 28 umfasst ferner eine Fase 57, welche im oberen ende des Klemmringes 55 ausgeführt ist. Im vorliegenden Fall hat diese Fase 57 im Querschnitt die Form des Mantels eines Konus. Der Neigungswinkel α (Alpha) dieses Konusmantels 57 gegenüber der Zentralachse A ist etwas grösser als der Neigungswinkel β (Beta) der Fase 36 am Stempel 32.

Die Höhe H2 des Klemmringes 55 ist kleiner als die Höhe H1 der Hauptplatte 51 der Matrize 31. Der Spalt, welcher sich zwischen der Unterseite des Klemmringes 55 und der darunter liegenden Hilfsplatte 52 befindet, ist durch einen flachen Ring 56 ausgefüllt, welcher aus einem nachgiebigen Material, beispielsweise aus einem Elastomer, ist. Die Höhe dieses flachen Ringes 56 ist so gewählt, dass dieser flache Ring 56 den Klemmring 55 im Ruhezustand der Einrichtung gegen die Unterseite des umlaufenden Anschlages 54 leicht andrückt.

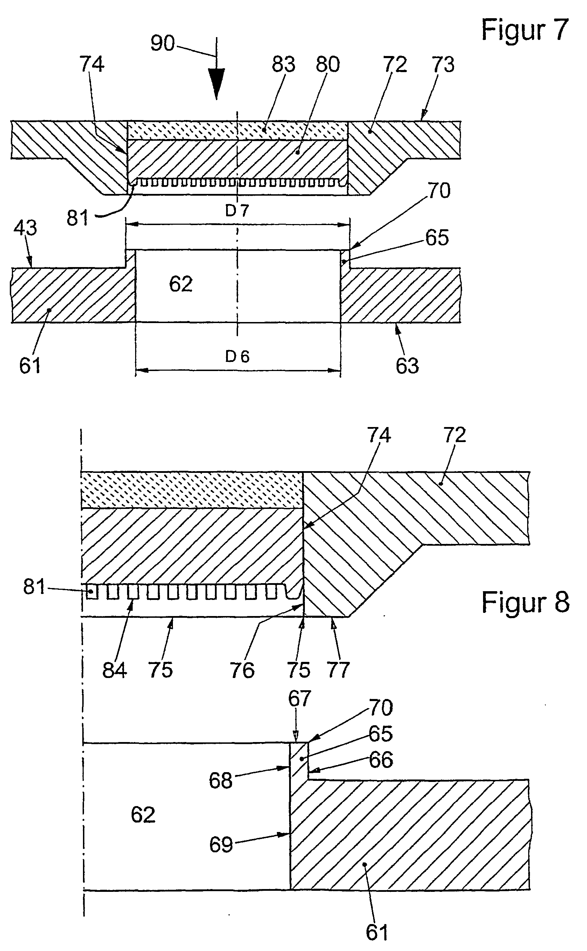

Beim Niederfahren des Stempels 32 wird das Bahnmaterial zunächst zwischen dem Konus 36 am Stempel 32 und der Schnittkante 59 an der Matrize 31 dermassen zusammengedrückt, dass die Scheibe aus der Materialbahn herausgeschnitten wird. Die Randpartie der herausgeschnittenen Scheibe wird dabei zwischen den konusförmigen Flächen 36 und 57 dermassen zusammengedrückt, dass sich der Verbund unter den Fasern der einzelnen Faserlagen 1 bis 3 bildet. Da die Fase 36 am Stempel 32 etwas steiler verläuft als an der Matrize, werden die umlaufenden Rillen 20 in der Scheibe in einer einzigen Operation zusammen mit dem Herausschneiden derselben ausgeführt. Die Vorrichtung nach Fig. 6 hat keine periodische Prägestruktur, weder in Matrize 31 noch im Stempel 32. Diese könnte jedoch sowohl in der Matrize 31 als auch im Stempel 32 nach den Ausführungsbeispielen der Fig. 5 oder 7 ergänzt werden.

Fig. 7 und 8 zeigen noch eine weitere Ausführungsmöglichkeit der vorliegenden Einrichtung. Die im wesentlichen plattenförmige Matrize 61 weist eine Öffnung 62 mit einem Durchmesser D6 auf. Aus der Oberfläche 43 des Matrizengrundkörpers 63 ragt ein umlaufender bzw. ringförmiger Vorsprung 65 empor. Dieser Ring 65 hat einen viereckförmigen Querschnitt mit den freistehenden Wandflächen 66, 67 und 68. Die zuletzt genannte Wandfläche 68 ist mit der Innenfläche 69 der Öffnung in der Matrize 61 bündig. Die zweite Wandfläche 67 erstreckt sich von der Innenfläche 68 horizontal weg und am Ende dieser Stirnfläche 67 schliesst sich die ebenfalls bereits genannte Aussenfläche 66 des Vorsprunges 65 an die Stirnfläche 67 rechtwinklig an, sodass diese Aussenfläche 66 in der Oberfläche 43 der Matrize 61 endet. Die Aussenfläche 66 weist einen Durchmesser D7 auf, wobei der Durchmesser D6 der Matrizenöffnung 62 kleiner ist als der Durchmesser D7 der Aussenfläche 66.

Der Grundkörper 73 des Stempels 72 ist im vorliegenden Fall eher flächenhaft und er weist eine durchgehende Öffnung 74 auf. Der Durchmesser dieser Stempelöffnung 74 gleicht dem Durchmesser D7 der Aussenfläche 66 des Ringes 65. Die Kante 70 an der Matrize 61, welche sich zwischen der Wandfläche 66 und 67 des Vorsprunges 65 befindet, dient als Schnittkante an der Matrize. Die entsprechende Gegenschnittkante 75 am Stempel 72 ist durch die praktisch rechtwinklig zueinander stehende Innenfläche 76 der Öffnung 74 im Stempel 72 und die rechtwinklig dazu stehende und sich an die Stempelöffnung 74 unmittelbar anschliessende Stirnfläche 77 des Stempels 72 definiert.

In der Stempelöffnung 74 ist eine Klemmplatte 80 angeordnet. Diese Klemmplatte 80 ist mit einem umlaufenden Wulst 81 versehen, welcher sich an der der Matrize 61 zugewandten Grossfläche der Klemmplatte 80 ausgebildet ist und von dieser Grossfläche gegen die Matrize 61 hin absteht. Dieser Wulst 81 schliesst sich an den Aussenrand der Klemmplatte 80 an. Die Höhe der Klemmplatte 80 ist kleiner als die Höhe des Grundkörpers 73 des Stempels 72 und der freie Raum über der Klemmplatte 80 ist mit einem nachgiebigen Medium 83 ausgefüllt, welches beispielsweise ein Elastomer sein kann. In den Fig. 7 und 8 ist der Wulst 81 nicht von gleichförmiger Höhe, sondern weist Zähne auf. Es ist auch möglich einen umlaufenden reinen Klemmwulst 81 vorzusehen.

Wenn der Stempel 72 mit einer Bewegung in Pfeilrichtung 90 heruntergefahren wird, dann wird die Scheibe aus dem Bahnmaterial durch die Schnittkanten 70 und 75 aus der Bahn herausgeschnitten. Bei fortgesetzter Abwärtsbewegung des Stempels 72 wird die Randpartie der Scheibe zwischen der Stirnfläche 67 des Vorsprunges 65 an der Matrize 61 und dem Wulst 81 der Klemmplatte 80 geklemmt. Hierbei werden die Fasern der drei Lagen 1 bis 3 der Scheibe so fest auf- bzw. ineinander gepresst, dass eine Verbindung zwischen den Randpartien dieser Lagen 1 bis 3 entsteht.

Das Wesentliche am Verfahren zur Herstellung der vorliegenden Scheiben ist, dass die Scheibe aus einer einlagigen oder mehrlagigen Materialbahn herausgeschnitten wird und dass Rillen in einem Abstand von der genannten Schnittstelle gebildet werden. Diese beiden Operationen werden während einem einzigen Hub der Einrichtung durchgeführt. Im Bereich der Rillen sind die Fasern des Materials der aufeinander liegenden Materiallage(n) so stark ineinander getrieben worden, dass die aufeinander liegenden Lagen zumindest im Bereich dieser Rillen fest miteinander verbunden sind.

Zumindest eine der Materiallagen der Scheibe kann eingefärbt sein, was beispielsweise in einem an sich bekannten Verfahren erreicht werden kann. Oder zumindest eine der Materiallagen kann eingefärbte Fasern enthalten. Ferner kann die Aussenfläche zumindest einer der Aussenlagen vertiefte Stellen, beispielsweise Prägestellen, aufweisen. Wenn gewünscht, könnten diese zuletzt beschriebenen Massnahmen miteinander kombiniert werden, sodass die verprägten Stellen oder die nicht verprägten Stellen einer Scheibe eingefärbt sind.

Die Fig. 9 zeigt in einem vertikalen Schnitt eine vierte Ausführung eines Werkzeuges einer Einrichtung zur Herstellung der Scheibe. Gegenüber der Ausführung der Fig. 6 ist der Stempel 32 an seinem konusförmigen Endbereich 36 nahe der unteren Kante 91 mit einer intermittierenden Struktur 92,93 versehen, die aus Vollmaterial oder Nasen 93 und Ausnehmungen 92 besteht. Diese Struktur ist besser in den Fig. 10 bis 12 zu erkennen.

Die Fig. 10 zeigt eine schematische Unteransicht auf den Stempel 32 des Werkzeuges nach Fig. 9, wobei dann Fig. 11 eine Detailquerschnittsansicht entlang der Linie 11-11 aus der Fig. 10, und Fig. 12 eine Detailquerschnittsansicht entlang der Linie 12-12 aus der Fig. 10 zeigt.

Die Fig. 10 zeigt den Stempel 32 sehr schematisch, insbesondere nur den Prägekonus 36 als aktiven Bereich 29 des Stempels 32. Dieser aktive Bereich ist im ganzen Kreis, das heisst in allen vier Quadranten dargestellt. Er besteht aus Nasen 93 und Ausnehmungen 92 zwischen diesen Nasen 93. Bei einem Prägering von beispielsweise 57 Millimeter Durchmesser beträgt die Ausnehmung 92 oder Abstand S zwischen zwei benachbarten Nasen 93 (oder zwischen zwei Ausnehmungen 92) beispielsweise zwischen 0,3 und 1,5 Millimeter. Der dabei aufgespannte Winkel Gamma (γ) beträgt beispielsweise 4,8 Grad. Die radiale Linie 11-11 geht durch eine Nase 93 hindurch, die dann in der Detailansicht der Fig. 11 dargestellt ist. Die radiale Linie 12-12 geht durch eine Ausnehmung 92 hindurch, die dann in der Detailansicht der Fig. 12 dargestellt ist.

Die Fig. 11 zeigt eine Nase 93, die sich über das durch eine strichlinierte Linie 94 angedeutete Niveau der Ausnehmung hinauserstreckt. Die Fig. 12 zeigt die Ausnehmung 92, deren Boden die Linie 94 bildet. Die Tiefe 95 der Ausnehmung 92 (oder die Höhe der Nase 93) kann zwischen 0,3 und 1,5 Millimeter betragen, vorzugsweise zwischen 0,5 und 1,0 Millimeter.

Die Kante 96 ist senkrecht zur Schnittfläche und parallel zur Mittelachse ausgerichtet. Die Seite 98 steht in einem Winkel von 40 bis 60 Grad und die Seite 97 in einem Winkel von 30 Grad zur Mittelachse.

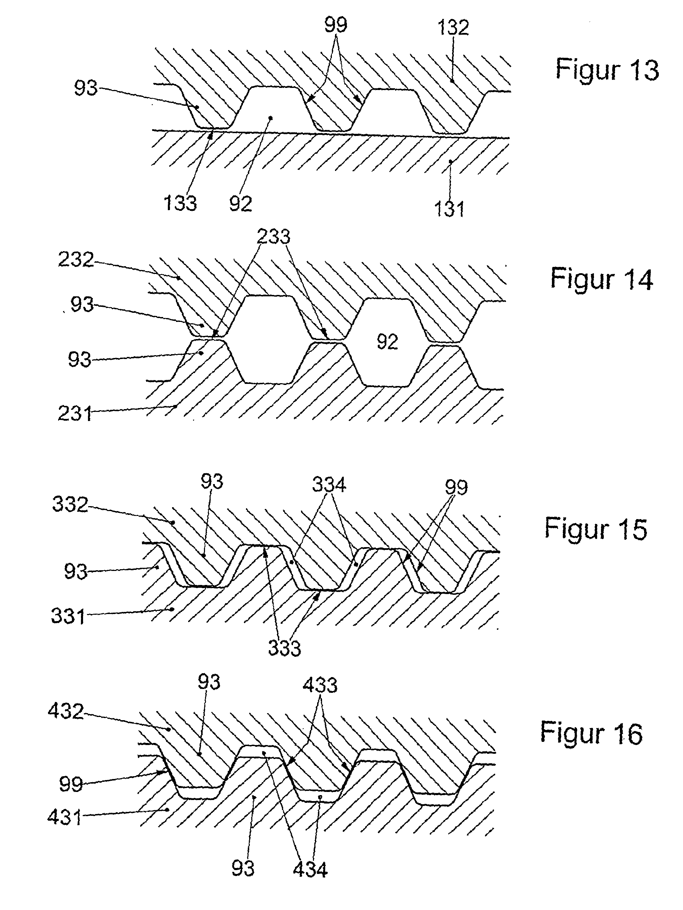

Die Fig. 13 zeigt eine schematische Seitenansicht von innen auf eine Matrize 131 und einen Stempel 132 gemäss einer ersten Ausführungsform von diesen. Damit kann eine solche Matrizen- und Stempel-Kombination 131/132 entsprechend in den Vorrichtungen nach den vorab beschriebenen Figuren eingesetzt werden. Die Nasen 93 und Ausnehmungen 92 sind ähnlich zu dem in den Fig. 10 bis 12 dargestellten Ausführungsbeispiel ausgeführt, wobei hier schräge Flanken 99 die Übergänge zwischen den Nasen 93 und den Ausnehmungen 92 bilden. Die Matrize 131 ist hier eben ausgebildet, so dass eine Klemmung der Scheibe im Bereich 133 an den Spitzen der Nasen auftritt. Natürlich sind die Funktionen von Matrize und Stempel austauschbar, das heisst, dass die Nasen 93 an der Matrize 131 ausgebildet sind.

Die Fig. 14 zeigt eine schematische Seitenansicht von innen auf eine Matrize 231 und einen Stempel 232 gemäss einer zweiten Ausführungsform von diesen. Hier verfügen Matrize 231 und Stempel 232 über einander gegenüberliegende Nasen 93 und Ausnehmungen 92, so dass die Klemmung in den Bereichen 233 stattfindet, in denen die Nasen 93 aufeinanderstossen.

Die Fig. 15 zeigt eine schematische Seitenansicht von innen auf eine Matrize 331 und einen Stempel 332 gemäss einer dritten Ausführungsform von diesen. Hier verfügen Matrize 331 und Stempel 332 über gegeneinander versetzte Nasen 93 und Ausnehmungen 92, wobei die Nasen 93 schmaler sind als die Breite der Ausnehmungen 92, so dass die Klemmung in den Bereichen 333 stattfindet, in denen die Nasen 93 des Stempels 332 auf die Bodenfläche der Ausnehmungen 92 der Matrize 331 stossen und umgekehrt. Es verbleibt dann jeweils ein Freiraum 334 im Bereich der Flanken 99 von Stempel 332 und Matrize 331.

Die Fig. 16 zeigt schliesslich eine schematische Seitenansicht von innen auf eine Matrize 431 und einen Stempel 432 gemäss einer vierten Ausführungsform von diesen. Hier verfügen Matrize 431 und Stempel 432 auch über gegeneinander versetzte Nasen 93 und Ausnehmungen 92, wobei aber die Nasen 93 breiter sind als die Breite der Ausnehmungen 92, so dass die Klemmung in den Bereichen 433 stattfindet, in denen die Flanken der Nasen 93 von Stempel 432 und Matrize 431 aufeinanderstossen. Es verbleibt dann jeweils ein Freiraum 434 im Bereich zwischen Spitze jeder Nase 93 und Bodenfläche jeder Ausnehmung 92 von Stempel 332 und Matrize 331.

Mit diesen Ausgestaltungen von Matrizen und Stempeln, die bei allen Ausführungsbeispielen der Figuren 5 bis 10 einsetzbar sind, können verschiedene Klemmeffekte und Strukturen der Klemmung bei den Scheiben nach Fig. 1 erreicht werden. Damit sind eine Vielzahl von Möglichkeiten für die Herstellung solcher Scheiben gegeben. Die Dimensionen der Winkel und Tiefe der einzelnen Nasen 93 und Ausnehmungen 92 können entsprechend den verwendeten Materialien und Dimensionen (z.B. Dicke) und Formen (z.B. kreisrund oder ellipsoid) für die Scheibe ausgewählt werden.

Der Fachmann stellt fest, dass an der jeweiligen inneren Kante der Vorrichtung geprägt/geklemmt und an der äusseren Kante geschnitten wird. Darüber hinaus ist durch die konvexe Form der Kurve 42 (Fig. 5) ein Aufnahmeraum für die seitlichen Büschel während der Prägung oder Klemmung geschaffen.

## Patentansprüche

1. Scheibe aus einer oder mehreren Lagen zum Auftragen und/oder Aufsaugen von flüssigen oder halbfesten Substanzen, wobei Randpartien (11, 12, 13) der Lage oder Lagen (1, 2, 3) flächenhaft aufeinander liegen und wobei die Scheibe an ihrem Umfang über einen Verdichtungsbereich (20) verfügt, **dadurch gekennzeichnet, dass** der Verdichtungsbereich (20) in einem radialen Abstand (B) von dem Umfang (4) der Scheibe vorgesehen ist.

2. Scheibe nach Anspruch 1, **dadurch gekennzeichnet, dass** der Verdichtungsbereich eine Rille (20) in der aussen liegenden Grossfläche (6) der oder zumindest einer der Lagen (1, 2, 3) ist und dass das faserige Material, welches sich im Bereich der Rille (20) befindet, dermassen zusammengedrückt bzw. zusammengequetscht wird, dass die Materiallagen im Bereich der Scheibenrille (20) miteinander verbunden sind.

3. Scheibe nach Anspruch 1 oder 2, **dadurch gekennzeichnet, dass** der Verdichtungsbereich (20) intermittierend (92, 93) vorgesehen ist.

4. Scheibe nach einem der Ansprüche 1 bis 3 mit zwei äusseren Lagen und einer weiteren bzw. dritten sich dazwischen befindlichen Lage, **dadurch gekennzeichnet, dass** der Durchmesser der weiteren bzw. inneren Materiallage (1) kleiner ist als der Durchmesser des Verdichtungsbereiches (20, oder dass der Durchmesser der inneren Materiallage (1) dem Durchmesser der äusseren Materiallagen (2, 3) zumindest gleicht, und dass das Material (11) der inneren Lage (1), welche sich in ihrem Randbereich (10) befindet, zwischen dem Randmaterial (12, 13) der äusseren Lagen (2, 3) liegt und zusammen mit diesem zusammengepresst bzw. zusammengequetscht ist.

5. Verfahren zur Herstellung einer Scheibe nach einem der Anspruche 1 bis 4, **dadurch gekennzeichnet, dass** in einer Arbeitsoperation die Scheibe aus einer Materialbahn herausgeschnitten wird, und dass zumindest ein Verdichtungsbereich (20) in einem radialen Abstand von der Schnittstelle (4) gebildet wird.

6. Einrichtung zur Durchführung des Verfahrens nach Anspruch 5, **dadurch gekennzeichnet, dass** eine Matrize (31) und ein dazugehörender Stempel (32) vorhanden sind und dass diese Bestandteile der vorliegenden Einrichtung so ausgeführt sind, dass sie einen in Bezug auf die herzustellende Scheibe äusseren schneidenden Abschnitt (36 zu 45 oder 59) und einen inneren quetschenden Abschnitt (36 zu 36/46 oder 60; 92/93 zu 60; 81/84 zu 67) aufweisen.

7. Einrichtung nach Anspruch 6, **dadurch gekennzeichnet, dass** eine Öffnung (35) in der Matrize (31) ausgeführt ist, dass eine umlaufende Vertiefung (41) mit einem schräg nach innen geneigten Boden (42) in jener Mündung der Matrizenöffnung (35) ausgeführt ist, welche dem Stempel (32) zugewandt ist, dass die Vertiefung (41) eine konkave Fase in der Matrize (31) definiert, dass der Querschnitt der Rille (41) bzw. des Bodens (42) derselben die Form einer hohlen gekrümmten Linie hat, sodass dieser Boden (42) eine äussere Kante (45) und eine im Inneren der Matrizenöffnung (35) liegende Kante (46) aufweist, dass im Randbereich der Stirnfläche des Stempels (32) eine konvexe Fase (36) ausgeführt ist, deren grössere Grundfläche sich an den Grundkörper (33) des Stempels (32) unter Bildung einer Kante (38) anschliesst, dass der Durchmesser (D1) dieser grösseren Fasengrundfläche bzw. grösseren Kante (38) dem Durchmesser des Stempels (32) entspricht, dass der Durchmesser der Kante (39) der kleineren Grundfläche der Stempelphase (36) kleiner ist als der Durchmesser (D2) der Matrizenöffnung (35), und dass der Winkel Alpha, welchen eine durch die Kanten (45, 46) der Matrizenrille (45) hindurchgehende Gerade (g) mit der Achse (A) schliesst, kleiner ist als ein Winkel Beta, welcher zwischen der Achse (A) und einer Geraden liegt, die durch die Wand der Stempelphase (36) hindurchgeht.

8. Einrichtung nach Anspruch 7, **dadurch gekennzeichnet, dass** eine Öffnung (40) in der Matrize (31) ausgeführt ist, dass ein Anschlagring (54) in Inneren der dem Stempel (32) zugewandten Mündung der Stempelöffnung (40) ausgeführt ist, dass die Matrizenöffnung (40) mit einem Klemmring (55) ausgekleidet ist, dass dieser Klemmring (55) in der Matrizenöffnung (40) eine begrenzte Verschiebebewegung in der Längsrichtung der Achse (A) ausführen kann, dass eine konkave Fase in jener Mündung des Klemmringes (55) ausgeführt ist, welche dem Stempel (32) zugewandt ist, dass im Randbereich der Stirnfläche des Stempels (32) eine konvexe Fase (36) ausgeführt ist, deren grösseren Grundfläche sich an den Grundkörper (33) des Stempels (32) unter Bildung einer Kante (38) anschliesst, dass der Durchmesser (D1) dieser Kante (38) dem Durchmesser des Stempels (32) entspricht, dass der Durchmesser der Kante (39) der kleineren Grundfläche der Stempelphase (36) kleiner ist als der Durchmesser (D2) der Öffnung (40) im Klemmring (55), und dass der Winkel Alpha, welcher eine durch die Fase (57) am Klemmring (55) geführte Gerade (g) mit der Achse (A) schliesst, kleiner ist als ein Winkel Beta, welcher zwischen der Achse (A) und einer Geraden liegt, die durch die Stempelphase (36) hindurchgeht.

9. Einrichtung nach Anspruch 6, **dadurch gekennzeichnet, dass** eine Öffnung (62) mit einem Durchmesser (D6) in der Matrize (61) ausgeführt ist, dass ein umlaufender bzw. ringförmiger Vorsprung (65) aus der Oberfläche (43) des Matrizengrundkörpers (63) empor ragt, dass dieser Ring (65) freistehende Seitenflächen (66, 68) hat, dass die zuletzt genannte, innere Seitenfläche (68) des Ringes (65) mit der Innenfläche (69) der Öffnung in der Matrize (61) bündig ist, dass die Aussenfläche (66) des Ringes (65) einen Durchmesser (D7) aufweist, wobei der Durchmesser (D6) der Matrizenöffnung (62) kleiner ist als der Durchmesser (D7) der Ringaussenfläche (66), dass die Stirnfläche (67) des Ringes (65), welche zwischen den freien Enden der Seitenflächen (66, 68) desselben liegt, plan ist, dass eine durchgehende Öffnung (74) im Stempel (72) ausgeführt ist, dass der Durchmesser dieser Stempelöffnung (74) dem Durchmesser (D7) der Ringaussenfläche (66) gleicht, dass eine Klemmplatte (80) in der Stempelöffnung (74) angeordnet ist, dass die Höhe dieser Klemmplatte (80) kleiner ist als die Tiefe der Stempelöffnung (74), dass diese Klemmplatte (80) mit einem umlaufenden Wulst (81) versehen ist, welcher an der der Matrize (61) zugewandten Grossfläche der Klemmplatte (80) ausgebildet ist, dass die Stirnfläche (84) des Wulstes der Stirnfläche (67) des Vorsprunges (65) an der Matrize (61) gegenübersteht und dass der Kamm des Wulstes (81) in einem Abstand vom Aussenrand der Klemmplatte (80) angeordnet ist.

10. Einrichtung nach Anspruch 6, **dadurch gekennzeichnet, dass** der quetschende Abschnitt (36 zu 46; 92/93 zu 60) aus einer Abfolge von Erhebungen (93) und Ausnehmungen (92) entlang des unteren Kantenumfangkreise (31; 91) besteht, mit denen ein intermittierender Verdichtungsbereich (20) in der Scheibe herstellbar ist.

## Claims

1. Disc consisting of one or more plies for the application and/or absorption of liquid or semisolid substances, edge parts (11, 12, 13) of the ply or plies (1, 2, 3) lying one on the other in a sheetlike manner, and the disc having a compression region (20) on its circumference, **characterized in that** the compression region (20) is provided at a radial distance (B) from the circumference (4) of the disc.

2. Disc according to Claim 1, **characterized in that** the compression region is a groove (20) in the outer large surface (6) of the or at least of one of the plies (1, 2, 3), and **in that** the fibrous material which is located in the region of the groove (20) is pressed together or pinched together in such a way that the material plies are connected to one another in the region of the disc groove (20).

3. Disc according to Claim 1 or 2, **characterized in that** the compression region (20) is provided intermittently (92, 93).

4. Disc according to one of Claims 1 to 3, with two outer plies and with a further or third ply located between them, **characterized in that** the diameter of the further or inner material ply (1) is smaller than the diameter of the compression region (20), or **in that** the diameter of the inner material ply (1) is at least equal to the diameter of the outer material plies (2, 3), and **in that** the material (11) of the inner ply (1) which is located in the edge region (10) of the latter lies between the edge material (12, 13) of the outer plies (2, 3) and is pressed together or pinched together with the edge material.

5. Method for the production of a disc according to one of Claims 1 to 4, **characterized in that**, in one operation, the disc is cut out from a material web, and **in that** at least one compression region (20) is formed at a radial distance from the cutting point (4).

6. Device for carrying out the method according to Claim 5, **characterized in that** a female die (31) and a male die (32) associated with it are present, and **in that** these components of the present device are designed in such a way that they have, with respect to the disc to be produced, an outer cutting portion (36 to 45 or 59) and an inner pinching portion (36 to 36/46 or 60; 92/93 to 60; 81/84 to 67).

7. Device according to Claim 6, **characterized in that** an orifice (35) is formed in the female die (31), **in that** a peripheral depression (41) with a bottom (42) inclined obliquely inward is formed **in that** mouth of the female die orifice (35) which faces the male die (32), that the depression (41) defines a concave chamfer in the female die (31), **in that** the cross section of the groove (41) or of the bottom (42) of the latter is in the form of a hollow curved line, so that this bottom (42) has an outer edge (45) and an edge (46) lying inside the female die orifice (35), **in that**, in the edge region of the end face of the male die (32), a convex chamfer (36) is formed, the larger base of which adjoins the basic body (33) of the male die (32), so as to form an edge (38), **in that** the diameter (D1) of this larger chamfer base or larger edge (38) corresponds to the diameter of the male die (32), **in that** the diameter of the edge (39) of the smaller base of the male die chamfer (36) is smaller than the diameter (D2) of the female die orifice (35), and **in that** the angle alpha which a straight line (g) passing through the edges (45, 46) of the female die groove (45) forms with the axis (A) is smaller than an angle beta which lies between an axis (A) and a straight line passing through the wall of the male die chamfer (36).

8. Device according to Claim 7, **characterized in that** an orifice (40) is formed in the female die (31), **in that** an abutment ring (54) is formed inside that mouth of the male die orifice (40) which faces the male die (32), **in that** the female die orifice (40) is lined with a clamping ring (55), **in that** this clamping ring (55) can execute in the female die orifice (40) a limited displacement movement in the longitudinal direction of the axis (A), **in that** a concave chamfer is formed **in that** mouth of the clamping ring (55) which faces the male die (32), **in that**, in the edge region of the end face of the male die (32), a convex chamfer (36) is formed, the larger base of which adjoins the basic body (33) of the male die (32), so as to form an edge (38), **in that** the diameter (D1) of this edge (38) corresponds to a diameter of the male die (32), **in that** the diameter of the edge (39) of the smaller base of the male die chamfer (36) is smaller than the diameter (D2) of the orifice (40) in the clamping ring (55), and **in that** the angle alpha which a straight line (g) led through the chamfer (57) on the clamping ring (55) forms with the axis (A) is smaller than an angle beta which lies between the axis (A) and a straight line passing through the male die chamfer (36).

9. Device according to Claim 6, **characterized in that** an orifice (62) with a diameter (D6) is formed in the female die (61), **in that** a peripheral or annular projection (65) rises out of the surface (43) of the female die basic body (63), **in that** this ring (65) has free-standing lateral surfaces (66, 68), **in that** the last-mentioned inner lateral surface (68) of the ring (65) is flush with the inner face (69) of the orifice in the female die (61), **in that** the outer face (66) of the ring (65) has a diameter (D7), the diameter (D6) of the female die orifice (62) being smaller than the diameter (D7) of the ring outer face (66), **in that** the end face (67) of the ring (65), said end face lying between the free ends of the lateral surfaces (66, 68) of the latter, is plane, **in that** a continuous orifice (74) is formed in the male die (72), **in that** the diameter of this male die orifice (74) is equal to the diameter (D7) of the ring outer face (66), **in that** a clamping plate (80) is arranged in the male die orifice (74), **in that** the height of this clamping plate (80) is smaller than the depth of the male die orifice (74), **in that** this clamping plate (80) is provided with a peripheral bead (81) which is formed on the large surface, facing the female die (61), of the clamping plate (80), **in that** the end face (84) of the bead is opposite the end face (67) of the projection (65) on the female die (61), and **in that** the comb of the bead (81) is arranged at a distance from the outer edge of the clamping plate (80) .

10. Device according to claim 6, **characterized in that** the pinching portion (36 to 46; 92/93 to 60) consists of a sequence of elevations (93) and recesses (92) which are located along the lower circumferential edge circles (31; 91) and by means of which an intermittent compression region (20) can be produced in the disc.

## Revendications

1. Disque constitué d'une ou de plusieurs couches destiné à supporter et/ou aspirer des substances fluides ou semi-fluides, dans lequel des parties de bord (11, 12, 13) de la couche ou des couches (1, 2, 3) sont superposées à plat et dans lequel le disque possède sur sa périphérie une région d'étanchéité (20), **caractérisé en ce que** la région d'étanchéité (20) est prévue à une distance radiale (B) de la périphérie (4) du disque.

2. Disque selon la revendication 1, **caractérisé en ce que** la région d'étanchéité est une gorge (20) dans la grande surface (6) située à l'extérieur de la ou d'au moins une des couches (1, 2, 3) et **en ce que** le matériau fibreux qui se trouve dans la région de la gorge (20) est comprimé ou écrasé dans une mesure telle que les couches de matériau sont connectées l'une à l'autre dans la région de la gorge (20) du disque.

3. Disque selon la revendication 1 ou 2, **caractérisé en ce que** la région d'étanchéité (20) est prévue de manière intermittente (92, 93).

4. Disque selon l'une quelconque des revendications 1 à 3, comprenant deux couches extérieures et une troisième couche ou couche supplémentaire intermédiaire, **caractérisé en ce que** le diamètre de la couche supplémentaire ou intérieure de matériau (1) est plus petit que le diamètre de la région d'étanchéité (20), ou **en ce que** le diamètre de la couche de matériau intérieure (1) est au moins égal au diamètre des couches de matériau extérieures (2, 3), et **en ce que** le matériau (11) de la couche intérieure (1), qui se trouve dans sa région de bord (10), est situé entre le matériau de bord (12, 13) des couches extérieures (2, 3) et est comprimé ou écrasé conjointement avec celui-ci.

5. Procédé de fabrication d'un disque selon l'une quelconque des revendications 1 à 4, **caractérisé en ce que** dans une opération de travail, le disque est découpé dans une bande de matériau, et **en ce qu'**au moins une région d'étanchéité (20) est formée à une distance radiale de l'interface (4).

6. Dispositif pour la mise en oeuvre du procédé selon la revendication 5, **caractérisé en ce qu'**une matrice (31) et un poinçon associé (32) sont prévus et **en ce que** ces composants du présent dispositif sont réalisés de telle sorte qu'ils présentent par rapport au disque à fabriquer, une portion coupante extérieure (36 à 45 ou 59) et une portion écrasante intérieure (36 à 36/46 ou 60 ; 92/93 à 60 ; 81/84 à 67).

7. Dispositif selon la revendication 6, **caractérisé en ce qu'**une ouverture (35) est réalisée dans la matrice (31), **en ce qu'**un renfoncement périphérique (41) est réalisé avec un fond (42) incliné obliquement vers l'intérieur dans l'embouchure respective de l'ouverture de matrice (35), qui est tournée vers le poinçon (32), **en ce que** le renfoncement (41) définit un biseau concave dans la matrice (31), **en ce que** la section transversale de la gorge (41) ou du fond (42) de celle-ci a la forme d'une ligne courbe creuse, de sorte que ce fond (42) présente une arête extérieure (45) et une arête (46) se trouvant à l'intérieur de l'ouverture de matrice (35), **en ce que** dans la région de bord de la face frontale du poinçon (32) est réalisé un biseau concave (36) dont la plus grande surface de base se raccorde au corps de base (33) du poinçon (32) en formant une arête (38), **en ce que** le diamètre (D1) de cette plus grande surface de base du biseau ou de cette plus grosse arête (38) correspond au diamètre du poinçon (32), **en ce que** le diamètre de l'arête (39) de la plus petite surface de base du biseau du poinçon (36) est plus petit que le diamètre (D2) de l'ouverture de matrice (35), et **en ce que** l'angle alpha formé par une droite (g) passant par les arêtes (45, 46) de la gorge de matrice (45) et l'axe (A) est inférieur à un angle bêta formé entre l'axe (A) et une droite qui passe par la paroi du biseau du poinçon (36).

8. Dispositif selon la revendication 7, **caractérisé en ce qu'**une ouverture (40) est réalisée dans la matrice (31), **en ce qu'**une bague de butée (54) est réalisée à l'intérieur de l'embouchure de l'ouverture de poinçon (40) tournée vers le poinçon (32), **en ce que** l'ouverture de matrice (40) est revêtue d'une bague de serrage (55), **en ce que** cette bague de serrage (55) peut effectuer dans l'ouverture de matrice (40) un mouvement de coulissement limité dans le sens longitudinal de l'axe (A), **en ce qu'**un biseau concave est réalisé dans l'embouchure respective de la bague de serrage (55) qui est tournée vers le poinçon (32), **en ce que** dans la région de bord de la face frontale du poinçon (32) est réalisé un biseau convexe (36) dont la plus grande surface de base se raccorde au corps de base (33) du poinçon (32) en formant une arête (38), **en ce que** le diamètre (D1) de cette arête (38) correspond au diamètre du poinçon (32), **en ce que** le diamètre de l'arête (39) de la plus petite surface de base du biseau du poinçon (36) est plus petit que le diamètre (D2) de l'ouverture (40) dans la bague de serrage (55) et **en ce que** l'angle alpha qui formé par une droite (g) passant par le biseau (57) sur la bague de serrage (55) avec l'axe (A), est inférieur à un angle bêta formé entre l'axe (A) et une droite qui passe par le biseau du poinçon (36).

9. Dispositif selon la revendication 6, **caractérisé en ce qu'**une ouverture (62) de diamètre (D6) est réalisée dans la matrice (61), **en ce qu'**une saillie périphérique ou annulaire (65) dépasse hors de la surface (43) du corps de base de la matrice (63), **en ce que** cette bague (65) a des surfaces latérales autoportantes (66, 68), **en ce que** la surface latérale intérieure mentionnée en dernier (68), de la bague (65), est en affleurement avec la surface intérieure (69) de l'ouverture dans la matrice (61), **en ce que** la surface extérieure (66) de la bague (65) présente un diamètre (D7), le diamètre (D6) de l'ouverture de matrice (62) étant inférieur au diamètre (D7) de la surface extérieure de la bague (66), **en ce que** la surface frontale (67) de la bague (65), qui se trouve entre les extrémités libres des faces latérales (66, 68) de celle-ci, est plane, **en ce qu'**une ouverture traversante (74) est réalisée dans le poinçon (72), **en ce que** le diamètre de cette ouverture de poinçon (74) est égal au diamètre (D7) de la surface extérieure de la bague (66), **en ce qu'**une plaque de serrage (80) est disposée dans l'ouverture du poinçon (74), **en ce que** la hauteur de cette plaque de serrage (80) est inférieure à la profondeur de l'ouverture du poinçon (74), **en ce que** cette plaque de serrage (80) est pourvue d'un bourrelet périphérique (81), qui est réalisé sur la grande surface de la plaque de serrage (80) tournée vers la matrice (61), **en ce que** la face frontale (84) du bourrelet est en regard de la face frontale (67) de la saillie (65) sur la matrice (61) et **en ce que** la crête du bourrelet (81) est disposée à distance du bord extérieur de la plaque de serrage (80).

10. Dispositif selon la revendication 6, **caractérisé en ce que** la portion écrasante (36 à 46 ; 92/93 à 60) se compose d'une succession de rehaussements (93) et d'évidements (92) le long du cercle périphérique d'arête inférieur (31 ; 91), avec lesquels une région d'étanchéité intermittente (20) peut être créée dans le disque.
